# EUROPEAN PATENT APPLICATION

(11) **EP 4 648 488 A1**
(43) Date of publication of application: **12.11.2025**
(21) Application number: 23913890.2
(22) Date of filing: 03.01.2023
(51) Int. Cl.: H04W 52/02, H04L 27/26, H04W 76/27

(54) **WIRELESS COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2023/070028
(87) International publication number: WO 2024/145727

(57) **Abstract**

Provided in the present application are wireless communication methods and devices. A first communication device can obtain a target measurement result by measuring a first signal and a second signal, that is, by measuring the first signal and the second signal, the measurement result can be reliably acquired so as to ensure measurement quality. In addition, the first signal and the second signal have simple structures, such that more power-efficient measurement is realized. A wireless communication method includes: obtaining, by a first communication device, a target measurement result by measuring a first signal and a second signal, where the first signal is a signal carrying information through signal amplitude, or the first signal is a signal received using envelope detection, and/or the second signal is a signal carrying information through signal amplitude, or the second signal is a signal received using envelope detection.

## Description

### TECHNICAL FIELD

Embodiments of the present disclosure relate to the field of communication, and in particular, to a wireless communication method and device.

### BACKGROUND

In a New Radio (NR) system, evolution of random communication technology has placed increased requirements on measurement (e.g., power saving, reliability). How to perform the measurement to meet the increased measurement requirements is a problem that needs to be solved.

### SUMMARY

The present disclosure provides a wireless communication method and device. A first communication device may obtain a target measurement result by measuring a first signal and a second signal. That is, by measuring the first signal and the second signal, the measurement result may be reliably obtained to ensure a measurement quality. Moreover, the first signal and the second signal have a simple structure, making the measurement more power saving.

In a first aspect, a wireless communication method is provided, and includes:
obtaining, by a first communication device, a target measurement result by measuring a first signal and a second signal, where
the first signal is a signal that carries information through signal amplitude, or the first signal is a signal received using envelope detection; and/or the second signal is a signal that carries information through the signal amplitude, or the second signal is a signal received using the envelope detection.

In a second aspect, a wireless communication method is provided, and includes:
transmitting, by a second communication device, a first signal and a second signal, where
the first signal and the second signal are used by a first communication device to obtain a target measurement result; and
a signal of the first signal is a signal that carries information through signal amplitude, or a signal of the first signal is a signal received using envelope detection; and/or the second signal is a signal that carries information through the signal amplitude, or the second signal is a signal received using the envelope detection.

In a third aspect, a communication device is provided, and configured to perform the method in the first aspect.

Specifically, the communication device includes a function module configured to perform the method in the first aspect.

In a fourth aspect, a communication device is provided, and configured to perform the method in the second aspect.

Specifically, the communication device includes a function module configured to perform the method in the second aspect.

In a fifth aspect, a communication device is provided, and includes a processor and a memory. The memory is configured to store a computer program, and the processor is configured to call and run the computer program stored in the memory to cause the communication device to perform the method in the first aspect.

In a sixth aspect, a communication device is provided, and includes a processor and a memory. The memory is configured to store a computer program, and the processor is configured to call and run the computer program stored in the memory to cause the communication device to perform the method in the second aspect.

In a seventh aspect, an apparatus is provided, and configured to implement the method in any one of the first aspect and the second aspect.

Specifically, the apparatus includes a processor, and the processor is configured to call and run a computer program from a memory to cause a device equipped with the apparatus to perform the method in any one of the first aspect and the second aspect.

In an eighth aspect, a computer-readable storage medium is provided, and configured to store a computer program. The computer program causes a computer to perform the method in any one of the first aspect and the second aspect.

In a ninth aspect, a computer program product is provided, and includes computer program instructions. The computer program instructions cause a computer to perform the method in any one of the first aspect and the second aspect.

In a tenth aspect, a computer program is provided. The computer program, when executed on a computer, causes the computer to perform the method in any one of the first aspect and the second aspect.

Through the above technical solutions, the first communication device may obtain the target measurement result by measuring the first signal and the second signal. That is, by measuring the first signal and the second signal, the measurement result may be reliably obtained to ensure the measurement quality. Moreover, the first signal and the second signal have a simple structure, making the measurement more power saving.

### BRIEF DESCRIPTION OF THE DRAWINGS

FIG. 1 is a schematic diagram of an architecture of a communication system provided in embodiments of the present disclosure.
FIG. 2 is a diagram of a receiver system based on zero-power-consumption wake up provided in the present disclosure.
FIG. 3 is a schematic diagram of a multi-carrier on-off keying (MC-OOK) signal generated through multi-carrier modulation provided in the present disclosure.
FIG. 4 is a schematic diagram of a modulation depth provided in embodiments of the present disclosure.
FIG. 5 is a schematic diagram of a constellation point region A and a constellation point region B provided in embodiments of the present disclosure.
FIG. 6 is a schematic flowchart of a wireless communication method provided in embodiments of the present disclosure.
FIG. 7 is a schematic diagram of a wake up signal (WUS) and a data signal mapping provided in embodiments of the present disclosure.
FIG. 8 is a schematic diagram of a WUS provided in embodiments of the present disclosure.
FIGS. 9 to 15 are schematic diagrams of a first signal and a second signal provided in embodiments of the present disclosure.
FIG. 16 is a schematic block diagram of a communication device provided in embodiments of the present disclosure.
FIG. 17 is a schematic block diagram of another communication device provided in embodiments of the present disclosure.
FIG. 18 is a schematic block diagram of yet another communication device provided in embodiments of the present disclosure.
FIG. 19 is a schematic block diagram of an apparatus provided in embodiments of the present disclosure.
FIG. 20 is a schematic block diagram of a communication system provided in embodiments of the present disclosure.

### DETTAILED DESCRIPTION

Technical solutions in embodiments of the present disclosure will be described below in conjunction with drawings in the embodiments of the present disclosure. Apparently, the described embodiments are a part of the embodiments of the present disclosure, but not all of the embodiments. With respect to the embodiments in the present disclosure, all other embodiments obtained by the ordinary skilled in the art without paying creative efforts belong to the protection scope of the present disclosure.

The technical solutions of the embodiments of the present disclosure may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), internet of things (IoT), wireless fidelity (WiFi), a 5th-generation (5G) system, a 6th-generation (6G) system, or other communication systems.

Generally speaking, a limited number of connections supported by a traditional communication system is easy to implement. However, with the development of the communication technology, the mobile communication system will not only support the traditional communication, but also support, for example, device to device (D2D) communication, machine to machine (M2M) communication, machine type communication (MTC), vehicle to vehicle (V2V) communication, sidelink (SL) communication, vehicle to everything (V2X) communication. The embodiments of the present disclosure may also be applied to these communication systems.

In some embodiments, the communication system in the embodiments of the present disclosure may be applied to a carrier aggregation (CA) scenario, may also be applied to a dual connectivity (DC) scenario, and may also be applied to a standalone (SA) network deployment scenario or a non-standalone (NSA) network deployment scenario.

In some embodiments, the communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as an unshared spectrum.

In some embodiments, the communication system in the embodiments of the present disclosure may be applied to an FR1 frequency band (corresponding to a frequency band range of 410 MHz to 7.125 GHz), or may also be applied to an FR2 frequency band (corresponding to a frequency band range of 24.25 GHz to 52.6 GHz), or may also be applied to a new frequency band, such as a high frequency band corresponding to a frequency band range of 52.6 GHz to 71 GHz or corresponding to a frequency band range of 71 GHz to 114.25 GHz.

The embodiments of the present disclosure describe various embodiments in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (ST) in the WLAN, may be a cellular phone, a cordless phone, a session initiation protocol (SIP) phone, a wireless local loop (WLL) station, or a personal digital assistant (PDA) device, a handheld device with a wireless communication function, a computing device or other processing devices connected to a wireless modem, a vehicle-mounted device, a wearable device, a terminal device in a next generation communication system such as in an NR network, or a terminal device in a public land mobile network (PLMN) network evolved in the future, etc.

In the embodiments of the present disclosure, the terminal device may be deployed on land, which includes indoor or outdoor, in handheld, wearable or vehicle-mounted; may also be deployed on water (e.g., on a ship); may also be deployed in the air (e.g., on an airplane, a balloons, a satellite).

In the embodiments of the present disclosure, the terminal device may be a mobile phone, a tablet computer, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city or a wireless terminal device in smart home, a vehicle-mounted communication device, a wireless communication chip/application specific integrated circuit (ASIC)/system on chip (SoC), etc.

As an example but not a limitation, in the embodiments of the present disclosure, the terminal device may also be a wearable device. The wearable device, which is also referred to as a wearable smart device, is a generic term for devices that can be worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes, for example, a smart watch or smart glasses with full functions, large size, and entire or partial functions without relying on a smartphone, as well as, for example, a smart bracelet or smart jewelry for physical sign monitoring, which only focuses on a certain type of application function and needs to be used in conjunction with other devices such as a smartphone.

In the embodiments of the present disclosure, the network device may be a device used for communicating with a mobile device. The network device may be an access point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, or a relay station or an access point, or a vehicle-mounted device, a wearable device, and a network device or a base station (gNB) or a transmission reception point (TRP) in an NR network, or a network device in the PLMN network evolved in the future or a network device in the NTN network, etc.

As an example but not a limitation, in the embodiments of the present disclosure, the network device may have a mobile characteristic. For example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. In some embodiments, the network device may also be a base station provided on land, water, and other places.

In the embodiments of the present disclosure, the network device may provide a service for a cell, and the terminal device may communicate with the network device through a transmission resource (e.g., a frequency domain resource, or a frequency spectrum resource) used by the cell. The cell may be a cell corresponding to the network device (e.g., a base station), and the cell may belong to a macro base station or may also belong to a base station corresponding to a small cell. The small cell here may include a metro cell, a micro cell, a pico cell, a femto cell, etc. These small cells have characteristics of small coverage range and low transmission power, which are applicable for providing a data transmission service with high speed.

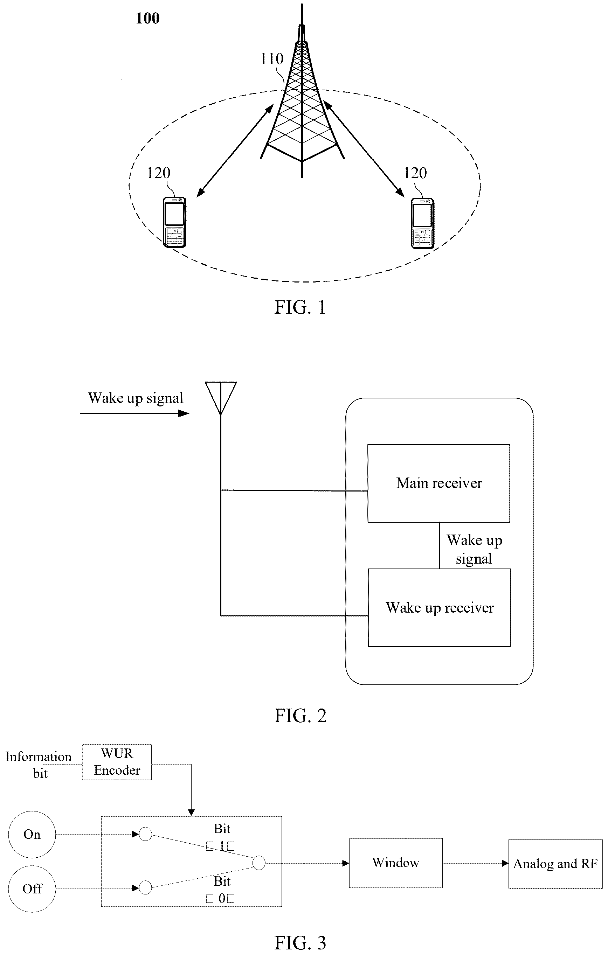

For example, a communication system 100 applied by the embodiments of the present disclosure is shown in FIG. 1. The communication system 100 may include a network device110, and the network device 110 may be a device that communicates with a terminal device 120 (or referred to as a communication terminal or a terminal). The network device 110 may provide communication coverage for a specific geographical area and may communicate with a terminal device located within the coverage area.

FIG. 1 exemplarily shows one network device and two terminal devices. In some embodiments, the communication system 100 may include a plurality of network devices and each network device may include other number of terminal devices within its coverage area, which is not limited in the embodiments of the present disclosure.

In some embodiments, the communication system 100 may also include other network entities such as a network controller and a mobility management entity, which is not limited to the embodiments of the present disclosure.

It should be understood that, in the embodiments of the present disclosure, a device with a communication function in the network/system may be referred to as a communication device. Taking the communication system 100 shown in FIG. 1 as an example, the communication device may include the network device 110 and the terminal device 120 that have the communication function. The network device 110 and the terminal device 120 may be the specific devices described above, which will not be repeated here. The communication device may also include other devices in the communication system 100, such as a network controller, a mobile management entity, and other network entities, which are not limited in the embodiments of the present disclosure.

It should be understood that the terms "system" and "network" are often used interchangeably herein. The term "and/or" herein is only an association relationship to describe associated objects, meaning that there may be three kinds of relationships. For example, A and/or B may mean three cases where: A exists alone, both A and B exist, and B exists alone. In addition, a character "/" herein generally means that related objects before and after "/" are in an "or" relationship.

It should be understood that the present disclosure relates to a first communication device and a second communication device. The first communication device may be a terminal device, such as a mobile phone, a machine facility, a customer premise equipment (CPE), an industrial device, or a vehicle. The second communication device may be a peer communication device of the first communication device, such as a network device, a mobile phone, an industrial device, or a vehicle. In the embodiments of the present disclosure, the first communication device may be a terminal device, and the second communication device may be a network device (i.e., uplink communication or downlink communication). Alternatively, the first communication device may be a first terminal, and the second communication device may be a second terminal (i.e., sidelink communication).

The terms used in the implementations of the present disclosure are only used to explain specific embodiments of the present disclosure and are not intended to limit the present disclosure. The terms "first", "second", "third" and "fourth", etc., in the specification, claims and drawings of the present disclosure are used to distinguish different objects rather than to describe a specific order. In addition, the terms "including", "having" and any variations thereof are intended to cover non-exclusive inclusion.

It should be understood that the "indication" mentioned in the embodiments of the present disclosure may be a direct indication, may also be an indirect indication, or may also represent having an association relationship. For example, A indicates B, which may mean that A directly indicates B, such as B may be acquired by A, may also mean that A indirectly indicates B, such as A indicates C, and B may be acquired by C; it may also mean that there is an association relationship between A and B.

In the description of the embodiments of the present disclosure, the term "correspondence" means that there is a direct correspondence or indirect correspondence between two, may also mean that there is an associated relationship between the two, or may also mean a relationship of indicating and being indicated or a relationship of configuring and being configured, etc.

In the embodiments of the present disclosure, "predefined" or "preconfigured" may be implemented by pre-saving corresponding codes, tables or other manners that may be used to indicate related information, in devices (e.g., including a terminal device and a network device), and the present disclosure does not limit its specific implementation. For example, the predefined may refer to what is defined in a protocol.

In the embodiments of the present disclosure, the "protocol" may refer to a standard protocol in the communication field, and may be for example evolution of an existing LTE protocol, NR protocol, Wi-Fi protocol, or other communication system-related protocols related thereto. The present disclosure does not limit a type of the protocol.

In order to facilitate better understanding of the embodiments of the present disclosure, energy saving of terminal based on a wake up receiver related to the present disclosure is described.

In order to further save power of the terminal device (UE), a wake up receiver is introduced to receive a wake up signal (WUS). The wake up receiver has characteristics of extremely low cost, extremely low complexity and extremely low power consumption. The wake up receiver mainly receives the WUS based on envelope detection. Therefore, the WUS received by the wake up receiver is different in modulation manner, waveform, etc., from a signal carried by a physical downlink control channel (PDCCH). The wake up signal is mainly an envelope signal obtained by modulating a carrier signal with amplitude shift keying (ASK). Demodulation of the envelope signal is completed mainly based on energy provided by a wireless radio frequency signal driving a low-power circuit, and thus the low-power circuit may be passive. The wake up receiver may also be powered by the terminal. Regardless of the power supply manner, the wake up receiver greatly reduces power consumption compared to a traditional receiver of the UE. The wake up receiver may be combined with the UE as an additional module of the UE receiver, or may be used alone as a wake up function module of the UE.

Specifically, for example, FIG. 2 may be a block diagram of a receiver system based on zero-power-consumption wake up. The wake up receiver receives the WUS. If the UE is required to turn on a main receiver, the UE may be instructed to turn on the main receiver. Otherwise, the main receiver of the UE may be in a turn-off state or a powered-off state. It should be noted that the wake up receiver may also be referred to as a zero-power-consumption receiver or a low-power receiver, and the main receiver may also be referred to as a main transceiver, which is not limited to the embodiments of the present disclosure.

Due to the extremely low power consumption of the wake up receiver, it does not need to be turned on and turned off to save power like a traditional receiver (i.e., the main receiver). Instead, the wake up receiver may remain on to receive the WUS. The WUS may be the envelope signal obtained by modulating the carrier signal with the ASK. For example, the WUS in WiFi technology uses on-off keying (OOK) modulation. A principle of OOK modulation is to modulate an amplitude of the carrier signal to a non-zero value and a zero value, which correspond to on and off respectively and used to represent information bits. The OOK is also known as binary amplitude shift keying (2ASK). As shown in FIG. 3, a wake up radio synchronization (WUR-Sync) part carries a synchronization sequence repeated twice, in which bit 1 is modulated to on and bit 0 is modulated to off.

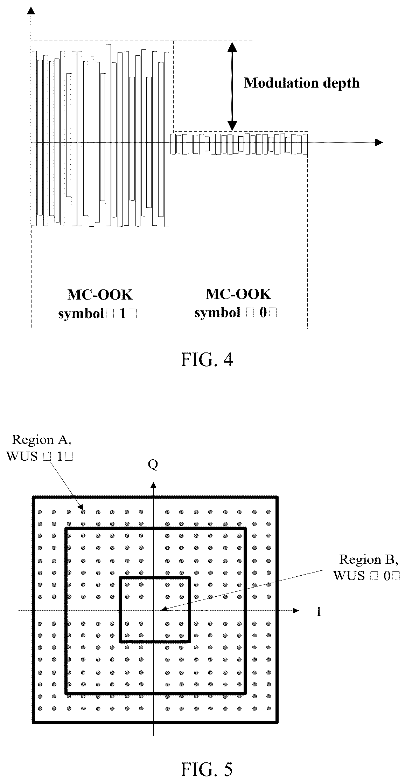

It should be noted that the OOK signal is generated through multi-carrier (MC), and thus referred to as an MC-OOK signal. The generation of the MC-OOK signal may employ multi-carrier modulation such as orthogonal frequency-division multiplexing (OFDM) modulation to generate the OOK signal, which may maintain good compatibility with an OFDM system and reduce transmitter complexity introduced by implementing a wake up radio (WUR) signal. FIG. 4 is a schematic diagram of an MC-OOK signal generated through the multi-carrier modulation. Corresponding amplitude values are mapped to multiple subcarriers in the frequency domain, these amplitude values are transformed to a waveform of a time domain signal using inverse discrete Fourier transform (IDFT), and the waveform is similar to a waveform formed through the ASK modulation, where bit 1 is represented with a high level signal and bit 0 is represented with a low level signal.

In the OOK signal generated through the multi-carrier, amplitudes of an on signal and an off signal need to reach certain modulation depths to be correctly demodulated at a receiving end. For example, for the MC-OOK signal of WiFi technology, a ratio of an average power of an on symbol to an average power of an off symbol needs to be at least 20 dB.

Therefore, when the on signal is generated, an assignment of a subcarrier carrying a signal needs to satisfy a requirement that an amplitude of the generated time domain signal meets a modulation depth, and the amplitude of the signal is as flat as possible within the time domain symbol. Accordingly, compared to the symbol of the on signal, the amplitude of the off signal is as low as possible to meet the modulation depth requirement. Taking 256 quadrature amplitude modulation (QAM) as an example, the above requirement is met by mapping different constellation points on subcarriers. As shown in FIG. 5, constellation points with large amplitudes (i.e., constellation points in region A) are mapped to subcarriers to generate the on signal (WUS "1"), and constellation points with small amplitudes (i.e., constellation points in region B) are mapped to subcarriers to generate the off signal (WUS "0"). The off signal may be achieved by setting corresponding subcarriers as null subcarriers.

In the symbols in which the off signal is located, the modulation symbols mapped to the corresponding subcarriers only need to ensure that a time domain waveform meets the low level, and even no modulation symbol is mapped on these carriers.

In order to facilitate better understanding of the embodiments of the present disclosure, a zero-power-consumption device related to the present disclosure is described.

With increase of 5G industry applications, there are more and more types of connected objects and application scenarios, and there will be higher requirements on cost and power consumption of communication terminals. The application of battery-free, low-cost passive IoT devices will become a key technology for cellular IoT. The types and number of 5G network-connected terminals are enriched to truly realize the Internet of Everything. Passive IoT devices may be based on existing zero-power-consumption devices and extended on this basis to be suitable for cellular IoT.

Based on energy sources and usage manners of zero-power-consumption terminals, the zero-power-consumption terminals may be divided into the following types.

### 1) Passive zero-power-consumption terminal

Zero-power-consumption terminals do not need built-in batteries. When a zero-power-consumption terminal approaches a network device (e.g., a reader/writer of a radio frequency identification (RFID) system), the zero-power terminal is located within a near-field range formed by antenna radiation of the network device. Therefore, the antenna of the zero-power-consumption terminal generates an induced current through electromagnetic induction, and the induced current drives a low-power-consumption chip circuit of the zero-power-consumption terminal. Demodulation of a forward link signal and modulation of a reverse link signal, etc., are realized. For a backscatter link, the zero-power terminal transmits a signal in a backscatter manner.

It can be seen that the passive zero-power-consumption terminal does not require a built-in battery to drive either the forward link or the reverse link, and is a truly zero-power-consumption terminal.

The passive zero-power-consumption terminals do not require batteries, and a RF circuit and a baseband circuit are very simple. For example, they do not require a low noise amplifier (LNA), a power amplifier (PA), a crystal oscillator, an analog-to-digital converter (ADC), etc. Therefore, they have many advantages such as small size, light weight, very low price, and long service life.

### 2) Semi-passive zero-power-consumption terminal

The semi-passive zero-power-consumption terminal itself does not have a conventional battery installed, but may use an energy harvesting module to harvest ambient energy and store the harvested energy in an energy storage unit (e.g., a capacitor). After obtaining energy, the energy storage unit may drive a low-power chip circuit of the zero-power-consumption terminal. The demodulation of the forward link signal and the modulation of the reverse link signal are realized. For the reverse link, the zero-power-consumption terminal may transmit the signal in the backscatter manner or the active transmission manner. Ambient energy may include wireless energy, solar energy, thermal energy, etc.

It can be seen that the semi-passive zero-power-consumption terminal does not require a built-in battery to drive either the forward link or the reverse link. Although energy stored in the capacitor is used in operation, the energy comes from the radio energy collected by the energy harvesting module. Therefore, it is also a truly zero-power-consumption terminal.

The semi-passive zero-power-consumption terminal inherits many advantages of the passive zero-power-consumption terminal, so it has many advantages such as small size, light weight, very cheap price and long service life.

### 3) Active zero-power-consumption terminal

The zero-power-consumption terminal used in some scenarios may also be the active zero-power-consumption terminal, which may have a built-in battery. The battery is used to drive a low-power-consumption chip circuit of the zero-power-consumption terminal. The demodulation of the forward link signal and the modulation of the reverse link signal are realized. For the reverse link, the zero-power-consumption terminal transmit signals in backscatter or active transmission.

The active zero-power-consumption terminal is powered by the built-in battery to increase a communication distance of the zero-power-consumption terminal and improve communication reliability. Therefore, it may be applied in some scenarios with relatively high requirements on the communication distance, reading latency, etc.

For example, in an NR system and a WiFi system, the battery-free and low-cost devices may support low-cost, large-scale deployment and maintenance-free of IoT devices. An IoT device based on the ambient energy is supported in the NR system and the WiFi system, and is referred to as an ambient IoT and an ambient power (AMP) enabled IoT device, and the energy required for its operation comes from ambient energy collection. The source of ambient energy may be a wireless signal, solar energy, thermal energy, etc. This type of device is similar to a passive device or a semi-passive device in zero-power-consumption communication.

In order to facilitate better understanding of the embodiments of the present disclosure, problems solved by the present disclosure are described.

In a process of detecting the WUS by the wake up receiver of the UE, there is a need to detect a quality of the WUS by the UE, in order to determine a reception quality of the WUS and then determine whether to maintain a WUS on state. That is, a state of the WUS is detected by the wake up receiver. If the reception quality of the WUS meets certain conditions, the WUS on state is maintained. Otherwise, it is necessary to exit the WUS on state and turn on the main receiver to receive related signals. In order to measure the quality of the WUS, it is necessary to measure certain signals, such as a synchronization signal, a reference signal, a measurement signal, and these signals are generally transmitted periodically. Configuring these signals will bring additional resource overhead and reception complexity. Directly measuring the WUS itself may avoid additional resource overhead. However, the WUS cannot guarantee periodic or stable measurement results because the WUS is transmitted on demand and periodicity of the transmission cannot be guaranteed, which will cause the UE to be unable to obtain the measurement result timely.

Based on the above problems, the present disclosure provides a measurement scheme. A first communication device may obtain a target measurement result by measuring a first signal and a second signal. That is, by measuring the first signal and the second signal, the measurement result may be reliably obtained to ensure the measurement quality. Moreover, the first signal and the second signal have a simple structure, making the measurement more power saving.

To facilitate understanding of the technical solutions of the embodiments of the present disclosure, the technical solutions of the present disclosure are described in detail below through specific embodiments. The related technologies below as optional solutions may be arbitrarily combined with the technical solutions of the embodiments of the present disclosure, which all belong to the protection scope of the embodiments of the present disclosure. The embodiments of the present disclosure include at least part of the following contents.

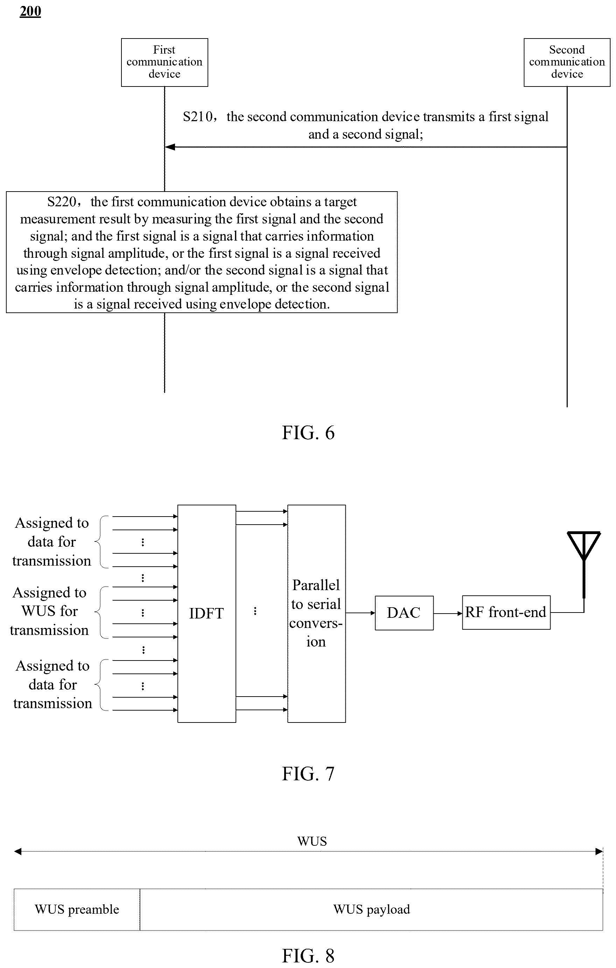

FIG. 6 is a schematic flow chart of a wireless communication method 200 according to the embodiments of the present disclosure. As shown in FIG. 6, the wireless communication method 200 may include at least part of the following contents.

In S210, a second communication device transmits a first signal and a second signal.

In S220, a first communication device obtains a target measurement result by measuring the first signal and the second signal. The first signal is a signal that carries information through signal amplitude, or the first signal is a signal received using envelope detection; and/or the second signal is a signal that carries information through the signal amplitude, or the second signal is a signal received using the envelope detection.

In the embodiments of the present disclosure, the first communication device may obtain the target measurement result by measuring the first signal and the second signal. That is, by measuring the first signal and the second signal, the measurement result may be reliably obtained to ensure a measurement quality. Moreover, the first signal and the second signal have a simple structure, making the measurement more power saving.

In some embodiments, the target measurement result is used to determine a reception quality of a target signal. The target signal is a signal that carries information through signal amplitude, or the target signal is a signal received using the envelope detection. That is, in this embodiment, the first communication device may obtain the measurement result by measuring the first signal and the second signal, and determine the reception quality of the target signal based on the measurement result. That is, the first communication device may timely know the reception quality of the target signal, thereby ensuring reliable transmission of the target signal.

In some embodiments, the target measurement result is a radio resource management (RRM) measurement result. That is, in this embodiment, the first communication device obtains the RRM measurement result by measuring the first signal and the second signal. Since the first signal and the second signal have a simple structure, the RRM measurement saves more power. Optionally, the wake up receiver of the first communication device (e.g., the terminal) obtains the RRM measurement result by measuring the first signal and the second signal. In this way, it is possible to avoid waking up the main receiver of the first communication device (e.g., the terminal) to perform the RRM measurement, thereby saving power of the first communication device (e.g., the terminal).

In some embodiments, the target measurement result is a mobility measurement result. That is, in this embodiment, the first communication device obtains the mobility measurement result by measuring the first signal and the second signal. Since the first signal and the second signal have a simple structure, the mobility measurement saves more power. Optionally, the wake up receiver of the first communication device (e.g., the terminal) obtains the mobility measurement result by measuring the first signal and the second signal. In this way, it is possible to avoid waking up the main receiver of the first communication device (e.g., the terminal) to perform the mobility measurement, thereby saving power of the first communication device (e.g., the terminal).

In some embodiments, the target measurement result is a radio link monitoring (RLM) measurement result. That is, in this embodiment, the first communication device obtains the RLM measurement result by measuring the first signal and the second signal. Since the first signal and the second signal have a simple structure, the measurement saves more power. Optionally, the wake up receiver of the first communication device (e.g., the terminal) obtains the RLM measurement result by measuring the first signal and the second signal. In this way, it is possible to avoid waking up the main receiver of the first communication device (e.g., the terminal) to perform the RLM measurement, thereby saving power of the first communication device (e.g., the terminal).

In some embodiments, the first communication device may also measure other signals including the first signal and the second signal to obtain the target measurement result, which is not limited in the embodiments of the present disclosure.

In some embodiments, the first communication device (e.g., the terminal) may include a main receiver and a wake up receiver. As shown in FIG. 2, the wake up receiver may receive a WUS and, if the main receiver needs to be turned on, may indicate to turn on the main receiver. Otherwise, the main receiver may be in a turn-off state or a powered-off state. In addition, the wake up receiver may receive other signals that carry information through signal amplitude, or the wake up receiver may receive other signals received using envelope detection. For example, the wake up receiver may receive the target signal, the first signal, and the second signal. It should be noted that the wake up receiver may also be referred to as a zero-power-consumption receiver or a low-power-consumption receiver, and the main receiver may also be referred to as a main transceiver, which is not limited to the embodiments of the present disclosure.

Specifically, for example, the main receiver of the first communication device (e.g., the terminal) is mainly used for receiving an NR signal and a channel. The wake up receiver receives the WUS, and thus the purpose of power saving may be achieved. When there is no data to be received, the main receiver may be turned off and the wake up receiver may be turned on to save power. Due to poor coverage of the WUS, only UEs within the coverage range of the WUS save power through the WUS. When the wake up receiver is turned on, it is necessary to detect the reception quality of the WUS. In a case where the reception quality of the WUS cannot meet a reliable reception of the WUS, it is necessary to exit the WUS on state to prevent the first communication device (e.g., the terminal) from always being unable to receive the WUS by the wake up receiver and unable to wake up the main receiver, resulting in communication interruption.

In some embodiments, the measurement result of the first signal and the second signal is measured by the wake up receiver of the first communication device, or the measurement result of the first signal and the second signal are measured by the main receiver of the first communication device.

Specifically, the measurement of the first signal and the second signal by the first communication device (e.g., the terminal) may be performed by the wake up receiver or the main receiver. For example, in a case where there is no data to be received, the main receiver may be turned off and the wake up receiver may be turned on to save power. Before the main receiver is turned off, it is necessary to determine whether the first communication device (e.g., the terminal) may reliably receive the WUS by the wake up receiver. In this way, when there is a need to wake up the main receiver through the network, it is woken up through the WUS. For example, the main receiver of the first communication device (e.g., the terminal) measures the first signal and the second signal to determine the reception quality of the WUS, so as to determine whether the WUS may be reliably received, thereby determining whether the main receiver may be turned off and the WUS is received by the wake up receiver to save power.

In some embodiments, the first communication device may be a zero-power-consumption device. The first communication device may demodulate or receive a signal that carries information through signal amplitude, or the first communication device may demodulate or receive a signal received using envelope detection. For example, the first communication device may demodulate or receive the target signal, the first signal, and the second signal. Optionally, the first communication device may obtain energy through energy harvesting for communication, information collection and processing. That is, before the second communication device communicates with the first communication device, it is first necessary to ensure that the first communication device receives a radio wave for wireless power supply and obtains wireless energy through energy harvesting. That is, the embodiments of the present disclosure may be applied to zero-power-consumption communication technology. Optionally, the target signal may be a power supply signal of the first communication device.

It should be understood that the present disclosure does not limit the specific manner in which the first communication device obtains energy through energy harvesting. As an example and not a limitation, the first communication device may obtain energy through a wireless power supply manner such as a wireless radio frequency signal, solar energy, pressure or temperature.

It should be noted that the zero-power-consumption device is a general name for devices with extremely low complexity and extremely low power consumption. This type of device does not rely on batteries. The energy required for its operation comes from the environment and it may have capabilities of energy collection and energy storage. The communication of the zero-power-consumption device may support simple modulation and demodulation manners, such as amplitude shift keying (ASK)/frequency shift keying (FSK). Specifically, the zero-power-consumption device may refer to an ambient power (AMP) enabled device introduced by a 3rd generation partnership project (3GPP) and WiFi technology, or may be a communication module of an existing device, such as a wake up radio (WUR) function module introduced by the WiFi technology and a wake up receiver of a terminal device introduced by the 3GPP.

Specifically, energy of AMP devices come from the environment. Depending on the type of the AMP device, some AMP devices may have an active transmission capability instead of relying solely on backscatter.

That is, in the embodiments of the present disclosure, the first communication device may be a receiver with only extremely low complexity and power consumption. Alternatively, the first communication device may be a device that communicates with the network by detecting a signal of a specific waveform, such as an ASK signal, an FSK signal, or an OOK signal. This type of device is, for example, the zero-power-consumption device or a device based on ambient energy, such as an Ambient IoT device. This type of device may communicate in an LTE system or an NR system, or in a WiFi system.

In some embodiments, the second communication device is a device for communicating with the first communication device. Optionally, the second communication device may be a network device, or the second communication device may be a terminal device, or the second communication device may be a power supply node.

In some embodiments, the second communication device may be a base station in the LTE system or the NR system, or an AP device in the WiFi system. And/or, the first communication device may be a terminal device having the wake up receiver in the LTE system or the NR system, or a non-access point station (non-AP STA) in the WiFi system, such as a station (STA) having a wake up radio (WUR) function.

In some embodiments, a signal that carries information through signal amplitude, or a signal received using envelope detection, which has a waveform different from an NR signal or a WiFi signal based on the OFDM, may be referred to as a wake up radio (WUR) signal. Functionally, the WUR signal may include the WUS, a synchronization signal, a measurement signal or a reference signal, etc. The WUR signal may be generated by an independent transmitter, or may be generated by a transmitter based on multi-carrier modulation.

In some embodiments, the target signal may be the WUR signal, such as the WUS. Of course, the target signal may also be other signals, or some signals used to transmit data, which is not limited in the embodiments of the present disclosure. Optionally, the WUS is an on-off keying (OOK) signal or a multi-carrier on-off keying (MC-OOK) signal. Specifically, for example, signals received by an IoT device with extremely low power consumption and complexity in the zero-power-consumption communication (such as an AMP IoT device) is mainly a signal based on ASK modulation, such as the OOK signal. The signals received by this type of device are not only a WUS for wake up, but also a signal for transmitting user data.

In some embodiments, the WUS is a signal received by the WUR receiver with extremely low power consumption and complexity, and has a waveform that is easy for the WUR detect, such as the ASK signal, the FSK signal, the OOK signal. The WUR signal may be generated using a multi-carrier modulation-based transmitter that is used to generate the NR signal. As shown in FIG. 7, the WUS and the NR signal are multiplexed within the frequency band. The WUS and the NR signal are mapped to different subcarriers, and processed and transmitted by an OFDM transmitter.

In some embodiments, the first signal is a partial signal of the target signal. Optionally, the target signal is a WUS, and the first signal is a preamble signal of the WUS.

It should be noted that the WUS is transmitted to the terminal through the network when necessary, and the terminal uses the WUS to turn on the main receiver. Therefore, the transmission of the WUS is on-demand, and not periodic. Therefore, if the WUS is used as a measurement signal, it will result in untimely and unstable obtaining of measurement results. In the embodiments of the present disclosure, the reception quality of the target signal may be determined by measuring both the first signal (a preamble signal of the WUS) and the second signal, and based on the measurement result.

Specifically, the preamble signal of the WUS is used to identify the WUS, or the preamble signal of the WUS is used to perform synchronization acquisition of WUS reception. As shown in FIG. 8, the WUS includes a preamble part and a payload part. A transmission period of the WUS is a duty cycle. That is, a resource corresponding to the WUS is a periodic preset resource. That is, a transmission timing of the WUS and a time window for detecting the WUS appear periodically, which is to further save power. However, the WUS does not need to be transmitted in every cycle.

In some embodiments, a resource corresponding to the second signal is a resource corresponding to part or all of the target signal. Optionally, the resource corresponding to the target signal is a periodic preset resource.

Specifically, for example, the target signal is the WUS, and the resource corresponding to the second signal is a resource corresponding to a preamble signal of the WUS. Alternatively, the resource corresponding to the second signal is a resource corresponding to a payload signal of the WUS. Alternatively, a resource corresponding to the second signal is the resource corresponding to the WUS.

In some embodiments, in a case where the resource corresponding to the second signal is a resource corresponding to the first signal of the target signal, the second signal is the same as the first signal. That is, in this embodiment, in order to avoid resource overhead and detection complexity caused by additional measurement signals, a reception quality of the target signal may be determined by measuring a partial signal of the target signal.

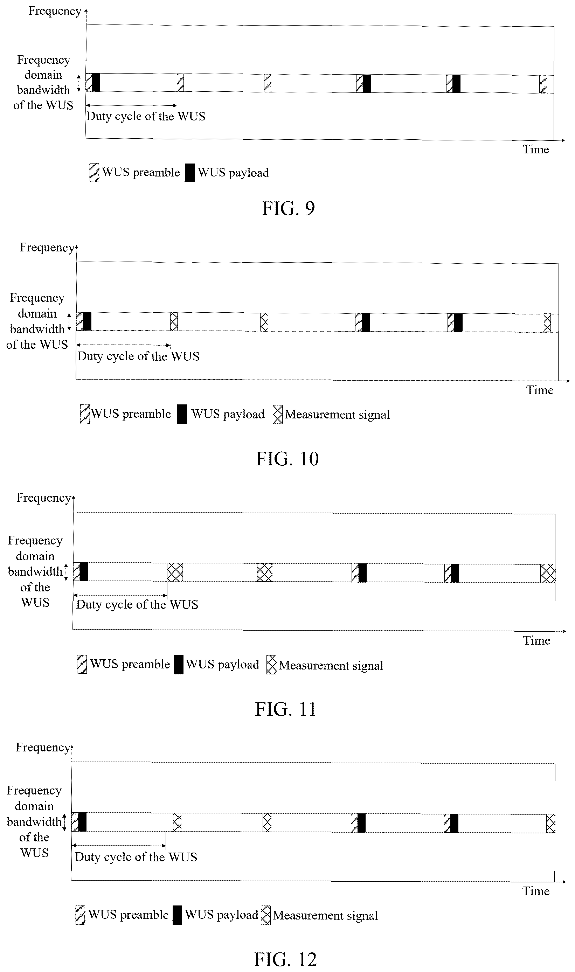

In some embodiments, the target signal is the WUS, and both the first signal and the second signal are preamble signals. As shown in FIG. 9, the first signal is a preamble signal of the WUS, and the second signal is a preamble signal transmitted separately from the WUS. Thereby, a periodic measurement signal (i.e., a preamble signal) may be obtained.

In other words, in this embodiment, in order to obtain the periodic measurement signal, the transmission of the preamble signal is periodic, and the payload part of the WUS carries the wake up information and is transmitted as needed. Therefore, the payload part of the WUS may be non-periodic. As shown in FIG. 9, a time domain resource of the WUS is configured based on a duty cycle, and the second communication device (e.g., a network device) does not transmit the WUS on each time domain resource of the WUS. In a case where there is no need to transmit the wake up information carried in the WUS, the second communication device still transmits the preamble signal for measurement by the first communication device (e.g., a terminal device). Specifically, in combination with the preamble signal included in the WUS when transmitted and the preamble signal transmitted separately, the preamble signal is a signal transmitted periodically.

In some embodiments, in a case where the resource corresponding to the second signal is the resource corresponding to the first signal of the target signal, the second signal is a signal different from the first signal.

In some embodiments, a sequence used for the second signal is different from a sequence used for the first signal. For example, although both the first signal and the second signal are preamble signals, the sequence used for the second signal is different from the sequence used for the first signal.

Specifically, the preamble signal of the WUS is generally a predefined sequence, which is used to identify the WUS and perform synchronization. The sequence used for the second signal (i.e., the preamble signal transmitted separately) may be different from the sequence used for the preamble signal of the WUS. That is, when the preamble signal is transmitted separately, using different sequences is beneficial to prevent the first communication device (e.g., the terminal) from receiving the WUS payload, and reducing the power consumption of the first communication device (e.g., the terminal).

In some embodiments, a sequence used for the second signal is specified by a protocol, or the sequence used for the second signal is configured by the network device.

Specifically, for example, the preamble signal of the WUS of the WiFi system uses a predefined 32-bit sequence W₀, and the second signal (i.e., the preamble signal transmitted separately) uses a 32-bit sequence W₁.

W₀ = [1 0 1 0 0 1 0 0 1 0 1 1 1 0 1 1 0 0 0 1 0 1 1 1 0 0 1 1 1 0 0 0], W₁ = [0 1 0 1 1 0 1 1 0 1 0 0 0 1 0 0 1 1 1 0 1 0 0 0 1 1 0 0 0 1 1 1].

It should be noted that W₀ and W₁ are only examples, and the embodiments of the present disclosure do not limit lengths and values of the specific sequences.

In some embodiments, the second signal is a measurement signal. For example, the first signal is a preamble signal of the WUS, and the second signal is the measurement signal.

Specifically, a resource corresponding to the WUS is generally preset or network configured, and the first communication device (e.g., the terminal) detects the WUS on the resource. In a case where there is no need to transmit the WUS on the resource of the WUS, the second communication device (e.g., the network device) may transmit a signal for measurement (i.e., the measurement signal) for measurement by the first communication device (e.g., the terminal).

For example, the second communication device (e.g., the network device) may transmit the measurement signal (i.e., the second signal) on a resource in the resource corresponding to the WUS that corresponds to the preamble signal of the WUS. The first signal is a preamble signal of the WUS, and the second signal is the measurement signal. As shown in FIG. 10, the measurement signal is transmitted on a time domain resource where the WUS is not transmitted. The measurement signal occupies the resource of the WUS resource that corresponds to the preamble signal of the WUS.

For example, the second communication device (e.g., the network device) may transmit the measurement signal (i.e., the second signal) on the resource corresponding to the WUS. The first signal is a preamble signal of the WUS, and the second signal is the measurement signal. As shown in FIG. 11, the measurement signal is transmitted on the time domain resource where the WUS is not transmitted. The measurement signal occupies all resources corresponding to the WUS.

For example, the second communication device (e.g., the network device) may transmit the measurement signal (i.e., the second signal) on a resource in a resource corresponding to the WUS that corresponds to the payload of the WUS. The first signal is the preamble signal of the WUS, and the second signal is the measurement signal. As shown in FIG. 12, the measurement signal is transmitted on the time domain resource where the WUS is not transmitted. The measurement signal occupies the resource of the WUS resource that corresponds to the payload of the WUS.

In some embodiments, a time domain resource corresponding to the second signal is at least partially different from a time domain resource corresponding to the target signal.

In some embodiments, a frequency domain resource corresponding to the second signal is the same as a frequency domain resource corresponding to the target signal.

Optionally, the second signal is the measurement signal. For example, the frequency domain resource in which the second signal (e.g., the measurement signal) is located is the same as the frequency domain resource of the target signal (e.g., the WUS), and the time domain resource in which the second signal (e.g., the measurement signal) is located is at least partially different from the time domain resource of the target signal (e.g., the WUS).

In some embodiments, the resource corresponding to the second signal is a periodic resource.

In some embodiments, the resource corresponding to the second signal is a preset resource, or the resource corresponding to the second signal is configured by the network device.

In some embodiments, a duty cycle of the resource corresponding to the second signal is different from a duty cycle of the resource corresponding to the target signal.

It should be noted that the resource corresponding to the second signal may occur periodically, and the duty cycle of the resource corresponding to the second signal represents a periodicity of the resource corresponding to the second signal. Similarly, the resource corresponding to the target signal may occur periodically, and the duty cycle of the resource corresponding to the target signal represents a periodicity of the resource corresponding to the target signal.

In this embodiment, in order to more flexibly configure the second signal (e.g., the measurement signal), the frequency domain resource in which the second signal is located may be the same as the frequency domain resource of the target signal (e.g., the WUS). However, the time domain resource in which the second signal is located may not be exactly the same as the time domain resource of the target signal (e.g., the WUS). For example, the duty cycle of the resource corresponding to the second signal (e.g., the measurement signal) may be different from the duty cycle of the resource corresponding to the target signal (e.g., the WUS).

Optionally, in a case where the second signal overlaps with the target signal in a certain transmission, this transmission of the second signal may be abandoned.

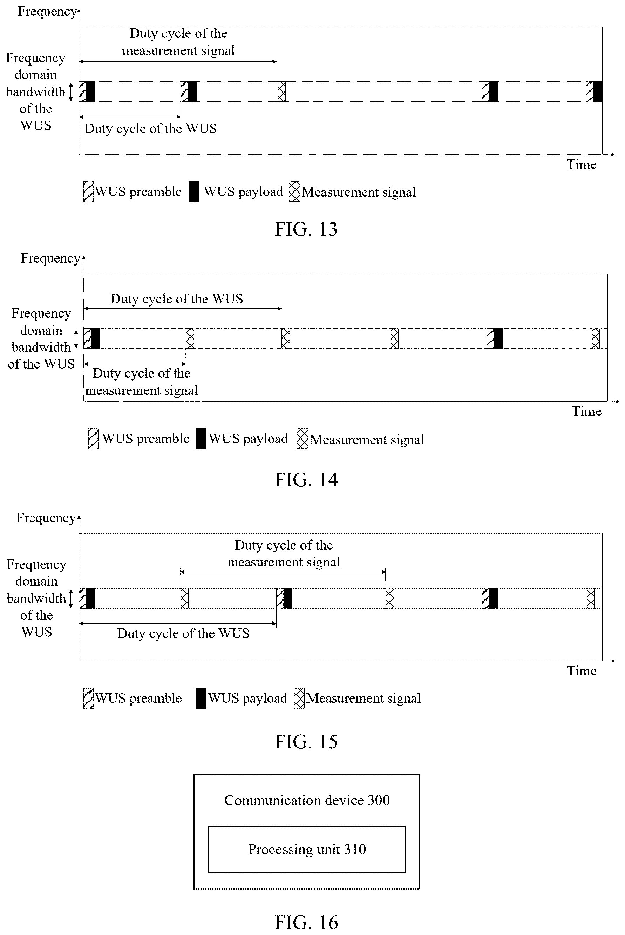

For example, the first signal is the preamble signal of the WUS, and the second signal is the measurement signal. As shown in FIG. 13, the duty cycle of the resource corresponding to the measurement signal is twice the duty cycle of the resource corresponding to the WUS, and the time domain resource of the measurement signal overlap with the time domain resource of the WUS. If the WUS is transmitted, the WUS preamble is used as the measurement signal. If the WUS is not transmitted, the measurement signal is transmitted.

Specifically, for example, the first signal is a preamble signal of the WUS, and the second signal is the measurement signal. As shown in FIG. 14, the duty cycle of the resource corresponding to the WUS is twice the duty cycle of the resource corresponding to the measurement signal, and the time domain resource of the measurement signal partially overlap with the time domain resource of the WUS. If the WUS is transmitted on the overlapped time domain resource, the WUS preamble is used as the measurement signal. If the WUS is not transmitted, the measurement signal is transmitted.

In some embodiments, a duty cycle of the resource corresponding to the second signal is the same as a duty cycle of the resource corresponding to the target signal.

Specifically, for example, the first signal is the preamble signal of the WUS, the second signal is the measurement signal, and the time domain resource of the measurement signal may not overlap with the time domain resource of the WUS. As shown in FIG. 15, the duty cycle of the resource corresponding to the WUS is equal to the duty cycle of the resource corresponding to the measurement signal, but the time domain resources thereof do not overlap. In this case, the signal for measurement may include the measurement signal and the preamble signal of the WUS.

Therefore, in the embodiments of the present disclosure, the first communication device may obtain the target measurement result by measuring the first signal and the second signal. That is, by measuring the first signal and the second signal, the measurement result may be reliably obtained to ensure the measurement quality. Moreover, the first signal and the second signal have a simple structure, making the measurement more power saving.

The method embodiments of the present disclosure are described in detail above in combination with FIGS. 6 to 15, and device embodiments of the present disclosure are described in detail below in combination with FIGS. 16 to 20. It should be understood that the device embodiments and the method embodiments correspond to each other, and similar descriptions may refer to the method embodiments.

FIG. 16 shows a schematic block diagram of a communication device 300 according to the embodiments of the present disclosure. The communication device 300 is the first communication device. As shown in FIG. 16, the communication device 300 includes:
a processing unit 310, configured to obtain a target measurement result by measuring a first signal and a second signal, where
the first signal is a signal that carries information through signal amplitude, or the first signal is a signal received using envelope detection; and/or the second signal is a signal that carries information through the signal amplitude, or the second signal is a signal received using the envelope detection.

In some embodiments, the target measurement result is used to determine a reception quality of a target signal, and the target signal is a signal that carries information through the signal amplitude, or the target signal is a signal received using the envelope detection; and/or,
the target measurement result is a radio resource management (RRM) measurement result; and/or,
the target measurement result is a mobility measurement result; and/or,
the target measurement result is a radio link monitoring (RLM) measurement result.

In some embodiments, the first signal is a partial signal of the target signal.

In some embodiments, a resource corresponding to the second signal is a resource corresponding to part or all of the target signal.

In some embodiments, the resource corresponding to the target signal is a periodic preset resource.

In some embodiments, in a case where the resource corresponding to the second signal is a resource corresponding to the first signal of the target signal, the second signal is the same signal as the first signal.

In some embodiments, in a case where the resource corresponding to the second signal is a resource corresponding to the first signal of the target signal, the second signal is a signal different from the first signal.

In some embodiments, a sequence used for the second signal is different from a sequence used for the first signal.

In some embodiments, the second signal is a measurement signal.

In some embodiments, a time domain resource corresponding to the second signal is at least partially different from a time domain resource corresponding to the target signal.

In some embodiments, the resource corresponding to the second signal is a periodic resource.

In some embodiments, the resource corresponding to the second signal is a preset resource, or the resource corresponding to the second signal is configured by the network device.

In some embodiments, a frequency domain resource corresponding to the second signal is the same as a frequency domain resource corresponding to the target signal.

In some embodiments, a duty cycle of the resource corresponding to the second signal is different from a duty cycle of the resource corresponding to the target signal.

In some embodiments, a duty cycle of the resource corresponding to the second signal is the same as a duty cycle of the resource corresponding to the target signal.

In some embodiments, the target signal is a wake up signal (WUS), and the first signal is a preamble signal of the WUS.

In some embodiments, the measurement result of the first signal and the second signal is measured by a wake up receiver of the first communication device, or the measurement result of the first signal and the second signal is measured by a main receiver of the first communication device.

In some embodiments, the communication unit may be a communication interface or a transceiver, or an input/output interface of a communication chip or a system on chip. The above-mentioned processing unit may be one or more processors.

It should be understood that the communication device 300 according to the embodiments of the present disclosure may correspond to the first communication device in the method embodiments of the present disclosure. Moreover, the above and other operations and/or functions of each unit in the communication device 300 are for implementing the corresponding process of the first communication device in the method 200 shown in FIG. 6, which will not be repeated here for the sake of brevity.

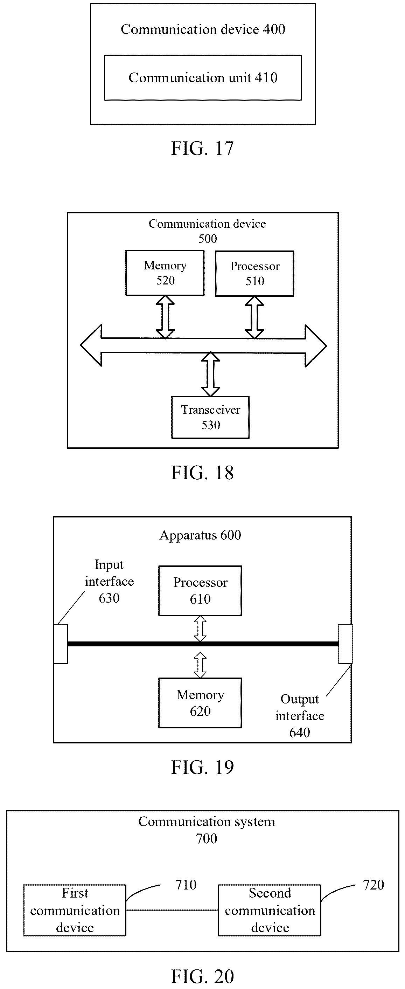

FIG. 17 shows a schematic block diagram of a communication device 400 according to the embodiments of the present disclosure. The communication device 400 is the second communication device. As shown in FIG. 17, the communication device 400 includes:
a communication unit 410, configured to transmit a first signal and a second signal, where
the first signal and the second signal are used by the first communication device to obtain a target measurement result; and
a signal of the first signal is a signal that carries information through signal amplitude, or a signal of the first signal is a signal received using envelope detection; and/or the second signal is a signal that carries information through the signal amplitude, or the second signal is a signal received using the envelope detection.

In some embodiments, the target measurement result is used to determine a reception quality of a target signal, and the target signal is a signal that carries information through the signal amplitude, or the target signal is a signal received using the envelope detection; and/or,
the target measurement result is a radio resource management (RRM) measurement result; and/or,
the target measurement result is a mobility measurement result; and/or,
the target measurement result is a radio link monitoring (RLM) measurement result.

In some embodiments, the first signal is a partial signal of the target signal.

In some embodiments, a resource corresponding to the second signal is a resource corresponding to part or all of the target signal.

In some embodiments, the resource corresponding to the target signal is a periodic preset resource.

In some embodiments, in a case where the resource corresponding to the second signal is a resource corresponding to the first signal of the target signal, the second signal is the same signal as the first signal.

In some embodiments, in a case where the resource corresponding to the second signal is a resource corresponding to the first signal of the target signal, the second signal is a signal different from the first signal.

In some embodiments, a sequence used for the second signal is different from a sequence used for the first signal.

In some embodiments, the second signal is a measurement signal.

In some embodiments, a time domain resource corresponding to the second signal is at least partially different from a time domain resource corresponding to the target signal.

In some embodiments, the resource corresponding to the second signal is a periodic resource.

In some embodiments, the resource corresponding to the second signal is a preset resource, or the resource corresponding to the second signal is configured by the network device.

In some embodiments, a frequency domain resource corresponding to the second signal is the same as a frequency domain resource corresponding to the target signal.

In some embodiments, a duty cycle of the resource corresponding to the second signal is different from a duty cycle of the resource corresponding to the target signal.

In some embodiments, a duty cycle of the resource corresponding to the second signal is the same as a duty cycle of the resource corresponding to the target signal.

In some embodiments, the target signal is a wake up signal (WUS), and the first signal is a preamble signal of the WUS.

In some embodiments, the measurement result of the first signal and the second signal is measured by a wake up receiver of the first communication device, or the measurement result of the first signal and the second signal is measured by a main receiver of the first communication device.

In some embodiments, the communication unit mentioned above may be a communication interface or a transceiver, or an input/output interface of a communication chip or a system on chip. The processing unit mentioned above may be one or more processors.

It should be understood that the communication device 400 according to the embodiments of the present disclosure may correspond to the second communication device in the method embodiments of the present disclosure. Moreover, the above and other operations and/or functions of each unit in the communication device 400 are for implementing the corresponding process of the second communication device in the method 200 shown in FIG. 6, which will not be repeated here for the sake of brevity.

FIG. 18 is a schematic diagram showing a structure of a communication device 500 provided in the embodiments of the present disclosure. The communication device 500 shown in FIG. 18 includes a processor 510, and the processor 510 may call and run a computer program from a memory to implement the method in the embodiments of the present disclosure.

In some embodiments, as shown in FIG. 18, the communication device 500 may further include a memory 520. The processor 510 may call and run a computer program from the memory 520 to implement the method in the embodiments of the present disclosure.

The memory 520 may be a separate device independent of the processor 510, or may be integrated into the processor 510.

In some embodiments, as shown in FIG. 18, the communication device 500 may further include a transceiver 530, and the processor 510 may control the transceiver 530 to communicate with other devices, specifically, to be capable of transmitting information or data to other devices, or receive information or data transmitted by other devices.

The transceiver 530 may include a transmitter and a receiver. The transceiver 530 may further include an antenna, and the number of antennas may be one or more.

In some embodiments, the processor 510 may implement a function of the processing unit in the first communication device, or the processor 510 may implement a function of the processing unit in the second communication device, which will not be repeated here for the sake of brevity.

In some embodiments, the transceiver 530 may implement a function of the communication unit in the first communication device, which will not be repeated here for the sake of brevity.

In some embodiments, the transceiver 530 may implement a function of the communication unit in the second communication device, which will not be repeated here for the sake of brevity.

In some embodiments, the communication device 500 may specifically be the first communication device in the embodiments of the present disclosure, and the communication device 500 may implement the corresponding process implemented by the first communication device in each method of the embodiments of the present disclosure, which will not be repeated here for the sake of brevity.

In some embodiments, the communication device 500 may specifically be the second communication device in the embodiments of the present disclosure, and the communication device 500 may implement the corresponding process implemented by the second communication device in each method of the embodiments of the present disclosure, which will not be repeated here for the sake of brevity.

FIG. 19 is a schematic diagram showing a structure of an apparatus in the embodiments of the present disclosure. The apparatus 600 shown in FIG. 19 includes a processor 610, and the processor 610 may call and run a computer program from a memory to implement the method in the embodiment of the present disclosure.

In some embodiments, as shown in FIG. 19, the apparatus 600 may further include a memory 620. The processor 610 may call and run a computer program from the memory 620 to implement the method in the embodiments of the present disclosure.

The memory 620 may be a separate device independent of the processor 610, or may be integrated into the processor 610.

In some embodiments, the apparatus 600 may further include an input interface 630. The processor 610 may control the input interface 630 to communicate with other devices or chips, and specifically, to be capable of obtaining information or data transmitted by other devices or chips. Optionally, the processor 610 may be located inside a chip or outside a chip.

In some embodiments, the processor 610 may implement a function of the processing unit in the second communication device, or the processor 610 may implement a function of the processing unit in the first communication device, which will not be repeated here for the sake of brevity.

In some embodiments, the input interface 630 may implement a function of the communication unit in the second communication device, or the input interface 630 may implement a function of the communication unit in the first communication device.

In some embodiments, the apparatus 600 may further include an output interface 640. The processor 610 may control the output interface 640 to communicate with other devices or chips, and specifically, to be capable of outputting information or data to other devices or chips. Optionally, the processor 610 may be located inside a chip or outside a chip.

In some embodiments, the output interface 640 may implement a function of the communication unit in the second communication device, or the output interface 640 may implement a function of the communication unit in the first communication device.

In some embodiments, the apparatus may be applied to the first communication device in the embodiments of the present disclosure, and the apparatus may implement the corresponding process implemented by the first communication device in each method of the embodiments of the present disclosure, which will not be repeated here for the sake of brevity.

In some embodiments, the apparatus may be applied to the second communication device in the embodiments of the present disclosure, and the apparatus may implement the corresponding process implemented by the second communication device in each method of the embodiments of the present disclosure, which will not be repeated here for the sake of brevity.

In some embodiments, the apparatus mentioned in the embodiments of the present disclosure may also be a chip. For example, it may be a system on chip, a system chip, a chip system, or a system-on-chip chip.

FIG. 20 is a schematic block diagram of a communication system 700 provided in the embodiments of the present disclosure. As shown in FIG. 20, the communication system 700 includes a second communication device 710 and a first communication device 720.

The second communication device 710 may be configured to implement the corresponding functions implemented by the second communication device in the above methods, and the first communication device 720 may be configured to implement the corresponding functions implemented by the first communication device in the above methods, which will not be repeated here for the sake of brevity.

It should be understood that the processor of the embodiments of the present disclosure may be an integrated circuit chip with a signal processing capability. In the implementation process, each step of the above method embodiments may be completed by an integrated logic circuit of hardware in the processor or instructions in a form of software. The above-mentioned processor may be a general-purpose processor, a digital signal processor (DSP), an application specific integrated circuit (ASIC), a field programmable gate array (FPGA) or other programmable logic devices, a discrete gate or transistor logic device, or a discrete hardware component. The various methods, steps and logic block diagrams in the embodiments of the present disclosure may be implemented or performed. The general purpose processor may be a microprocessor, or the processor may be any conventional processor or the like. The steps of the method disclosed in conjunction with the embodiments of the present disclosure may be directly embodied as being performed and completed by a hardware decoding processor, or performed and completed by a combination of hardware and software modules in the decoding processor. The software module may be located in a random access memory, a flash memory, a read-only memory, a programmable read-only memory, or an electrically erasable programmable memory, a register, or other mature storage media in the art. The storage medium is located in the memory, and the processor reads information in the memory and completes the steps of the above method in combination with its hardware.

It can be understood that the memory in the embodiments of the present disclosure may be a volatile memory or a non-volatile memory, or may include both the volatile memory and the non-volatile memory. The non-volatile memory may be a read-only memory (ROM), a programmable read-only memory (Programmable ROM, PROM), an erasable PROM (EPROM), an electrically EPROM (EEPROM), or a flash memory. The volatile memory may be a random access memory (RAM), which acts as an external cache memory. By way of example but not limited illustration, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and direct rambus RAM (DR RAM). It should be noted that the memory of the system and method described herein is intended to include, but be not limited to, these and any other suitable types of memories.

It should be understood that the above memory is exemplary but not limited illustrative. For example, the memory in the embodiments of the present disclosure may also be a SRAM, a DRAM, an SDRAM, a DDR SDRAM, an ESDRAM, an SLDRAM or a DR RAM. That is, the memory in the embodiments of the present disclosure is intended to include but be not limited to these and any other suitable types of memories.

The embodiments of the present disclosure further provide a computer-readable storage medium for storing a computer program.

In some embodiments, the computer-readable storage medium may be applied to the first communication device in the embodiments of the present disclosure, and the computer program causes the computer to perform the corresponding processes implemented by the first communication device in the various methods of the embodiments of the present disclosure, which will not be repeated here for the sake of brevity.

In some embodiments, the computer-readable storage medium may be applied to the second communication device in the embodiments of the present disclosure, and the computer program causes the computer to perform the corresponding processes implemented by the second communication device in the various methods of the embodiments of the present disclosure, which will not be repeated here for the sake of brevity.

The embodiments of the present disclosure further provide a computer program product, including computer program instructions.

In some embodiments, the computer program product may be applied to the first communication device in the embodiments of the present disclosure, and the computer program instructions cause the computer to execute the corresponding processes implemented by the first communication device in the various methods of the embodiments of the present disclosure, which will not be repeated here for the sake of brevity.

In some embodiments, the computer program product may be applied to the second communication device in the embodiments of the present disclosure, and the computer program instructions cause the computer to execute the corresponding processes implemented by the second communication device in the various methods of the embodiments of the present disclosure, which will not be repeated here for the sake of brevity.

The embodiments of the present disclosure further provide a computer program.

In some embodiments, the computer program may be applied to the first communication device in the embodiments of the present disclosure. When the computer program runs on a computer, the computer is caused to perform the corresponding processes implemented by the first communication device in the various methods of the embodiments of the present disclosure, which will not be repeated here for the sake of brevity.

In some embodiments, the computer program may be applied to the second communication device in the embodiments of the present disclosure. When the computer program runs on a computer, the computer is caused to perform the corresponding processes implemented by the second communication device in the various methods of the embodiments of the present disclosure, which will not be repeated here for the sake of brevity.

Those ordinary skilled in the art can recognize that the units and algorithm steps of each example described in conjunction with the embodiments disclosed herein can be implemented by electronic hardware, or a combination of computer software and electronic hardware. Whether these functions are performed in the form of hardware or software, depends on the specific applications and design constraints of the technical solutions. A skilled person may use different methods to implement the described functions for each specific application, but such implementation should not be considered beyond the scope of the present disclosure.

Those skilled in the art can clearly understand that, for the convenience and brevity of description, the specific working processes of the systems, apparatus and units described above may refer to the corresponding processes in the aforementioned method embodiments, which will not be repeated here.

In several embodiments provided in the present disclosure, it should be understood that the disclosed systems, apparatus, and methods may be implemented in other ways. For example, the apparatus embodiments described above are merely schematic. For example, the division of the units is merely a logical function division and there may be other division methods in actual implementations. For example, multiple units or components may be combined or integrated into another system, or some features may be ignored or not performed. In addition, coupling or direct coupling or communication connection between each other shown or discussed may be indirect coupling or communication connection through some interface, apparatus or unit, which may be electrical, mechanical or in other forms.

The units described as separate components may be or may not be physically separated, and the components shown as units may be or may not be physical units. That is, they may be located in one place or distributed over multiple network units. Part or all of the units may be selected according to actual needs to achieve the purpose of the solutions of the embodiments.

In addition, each function unit in each embodiment of the present disclosure may be integrated into one processing unit, or each unit may exist physically separately, or two or more units may be integrated into one unit.

If the described functions are implemented in the form of the software function unit and sold or used as an independent product, they may be stored in a computer-readable storage medium. For such an understanding, the technical solution of the present disclosure essentially, or a part of the technical solution of the present disclosure that contributes to the prior art, or a part of the technical solution, may be embodied in the form of a software product. The computer software product is stored in a storage medium and includes several instructions for causing a computer device (which may be a personal computer, a server, or a network device, etc.) to perform all or part of the steps of the method described in each embodiment of the present disclosure. The aforementioned storage medium include: a U disk, a mobile hard disk, a read-only memory (ROM), a random access memory (RAM), a magnetic disk or optical disk, or other media that may store program codes.

The above description is only specific implementations of the present disclosure, but the protection scope of the present disclosure is not limited thereto, and any skilled familiar with the technical field may easily think of changes or substitutions within the technical scope disclosed in the present disclosure, all of which should be included in the protection scope of the present disclosure. Therefore, the protection scope of the present disclosure shall be subject to the protection scope of the claims.

## Claims

1. A wireless communication method, comprising:
obtaining, by a first communication device, a target measurement result by measuring a first signal and a second signal, wherein
the first signal is a signal that carries information through signal amplitude, or the first signal is a signal received using envelope detection; and/or the second signal is a signal that carries information through signal amplitude, or the second signal is a signal received using envelope detection.

2. The method according to claim 1, wherein
the target measurement result is used to determine a reception quality of a target signal, wherein the target signal is a signal that carries information through signal amplitude, or the target signal is a signal received using envelope detection; and/or,
the target measurement result is a radio resource management (RRM) measurement result; and/or,
the target measurement result is a mobility measurement result; and/or,
the target measurement result is a radio link monitoring (RLM) measurement result.

3. The method according to claim 2, wherein
the first signal is a partial signal of the target signal.

4. The method according to claim 3, wherein
a resource corresponding to the second signal is a resource corresponding to part or all of the target signal.

5. The method according to claim 4, wherein the resource corresponding to the target signal is a periodic preset resource.

6. The method according to claim 4 or 5, wherein
in a case where the resource corresponding to the second signal is a resource corresponding to the first signal of the target signal, the second signal is the same signal as the first signal.

7. The method according to claim 4 or 5, wherein
in a case where the resource corresponding to the second signal is a resource corresponding to the first signal of the target signal, the second signal is a signal different from the first signal.

8. The method according to claim 7, wherein
a sequence used for the second signal is different from a sequence used for the first signal.

9. The method according to claim 4, 5 or 7, wherein
the second signal is a measurement signal.

10. The method according to claim 3, wherein
a time domain resource corresponding to the second signal is at least partially different from a time domain resource corresponding to the target signal.

11. The method according to claim 10, wherein the resource corresponding to the second signal is a periodic resource.

12. The method according to claim 10 or 11, wherein
the resource corresponding to the second signal is a preset resource, or the resource corresponding to the second signal is configured by a network device.

13. The method according to any one of claims 10 to 12, wherein
a frequency domain resource corresponding to the second signal is the same as a frequency domain resource corresponding to the target signal.

14. The method according to any one of claims 10 to 13, wherein
a duty cycle of the resource corresponding to the second signal is different from a duty cycle of the resource corresponding to the target signal.

15. The method according to any one of claims 10 to 13, wherein
a duty cycle of the resource corresponding to the second signal is the same as a duty cycle of the resource corresponding to the target signal.

16. The method according to any one of claims 2 to 15, wherein
the target signal is a wake up signal (WUS), and the first signal is a preamble signal of the WUS.

17. The method according to any one of claims 1 to 16, wherein
the measurement result of the first signal and the second signal is measured by a wake up receiver of the first communication device, or the measurement result of the first signal and the second signal is measured by a main receiver of the first communication device.

18. A wireless communication method, comprising:
transmitting, by a second communication device, a first signal and a second signal, wherein
the first signal and the second signal are used by a first communication device to obtain a target measurement result; and
a signal of the first signal is a signal that carries information through signal amplitude, or a signal of the first signal is a signal received using envelope detection; and/or the second signal is a signal that carries information through signal amplitude, or the second signal is a signal received using envelope detection.

19. The method according to claim 18, wherein
the target measurement result is used to determine a reception quality of a target signal, wherein the target signal is a signal that carries information through signal amplitude, or the target signal is a signal received using envelope detection; and/or,
the target measurement result is a radio resource management (RRM) measurement result; and/or,
the target measurement result is a mobility measurement result; and/or,
the target measurement result is a radio link monitoring (RLM) measurement result.

20. The method according to claim 19, wherein
the first signal is a partial signal of the target signal.

21. The method according to claim 20, wherein
a resource corresponding to the second signal is a resource corresponding to part or all of the target signal.

22. The method according to claim 21, wherein the resource corresponding to the target signal is a periodic preset resource.

23. The method according to claim 21 or 22, wherein
in a case where the resource corresponding to the second signal is a resource corresponding to the first signal of the target signal, the second signal is the same signal as the first signal.

24. The method according to claim 21 or 22, wherein
in a case where the resource corresponding to the second signal is a resource corresponding to the first signal of the target signal, the second signal is a signal different from the first signal.

25. The method according to claim 24, wherein
a sequence used for the second signal is different from a sequence used for the first signal.

26. The method according to claim 21, 22 or 24, wherein
the second signal is a measurement signal.

27. The method according to claim 20, wherein
a time domain resource corresponding to the second signal is at least partially different from a time domain resource corresponding to the target signal.

28. The method according to claim 27, wherein the resource corresponding to the second signal is a periodic resource.

29. The method according to claim 27 or 28, wherein
the resource corresponding to the second signal is a preset resource, or the resource corresponding to the second signal is configured by a network device.

30. The method according to any one of claims 27 to 29, wherein
a frequency domain resource corresponding to the second signal is the same as a frequency domain resource corresponding to the target signal.

31. The method according to any one of claims 27 to 30, wherein
a duty cycle of the resource corresponding to the second signal is different from a duty cycle of the resource corresponding to the target signal.

32. The method according to any one of claims 27 to 30, wherein
a duty cycle of the resource corresponding to the second signal is the same as a duty cycle of the resource corresponding to the target signal.

33. The method according to any one of claims 19 to 32, wherein
the target signal is a wake up signal (WUS), and the first signal is a preamble signal of the WUS.

34. The method according to any one of claims 19 to 33, wherein
the measurement result of the first signal and the second signal is measured by a wake up receiver of the first communication device, or the measurement result of the first signal and the second signal is measured by a main receiver of the first communication device.

35. A communication device, wherein the communication device is a first communication device, and the communication device comprises:
a processing unit, configured to obtain a target measurement result by measuring a first signal and a second signal, wherein
the first signal is a signal that carries information through signal amplitude, or the first signal is a signal received using envelope detection; and/or the second signal is a signal that carries information through signal amplitude, or the second signal is a signal received using envelope detection.

36. A communication device, wherein the communication device is a second communication device, and the communication device comprises:
a communication unit, configured to transmit a first signal and a second signal, wherein
the first signal and the second signal are used by a first communication device to obtain a target measurement result; and
a signal of the first signal is a signal that carries information through signal amplitude, or a signal of the first signal is a signal received using envelope detection; and/or the second signal is a signal that carries information through signal amplitude, or the second signal is a signal received using envelope detection.

37. A communication device, comprising: a processor and a memory, wherein the memory is configured to store a computer program, and the processor is configured to call and run the computer program stored in the memory, to cause the communication device to perform the method according to any one of claims 1 to 17.

38. A communication device, comprising: a processor and a memory, wherein the memory is configured to store a computer program, and the processor is configured to call and run the computer program stored in the memory, to cause the communication device to perform the method according to any one of claims 18 to 34.

39. A chip, comprising: a processor, configured to call and run a computer program from a memory, to cause a device equipped with the chip to perform the method according to any one of claims 1 to 17.

40. A chip, comprising: a processor, configured to call and run a computer program from a memory, to cause a device equipped with the chip to perform the method according to any one of claims 18 to 34.

41. A computer-readable storage medium, configured to store a computer program, wherein when the computer program is executed, the method according to any one of claims 1 to 17 is implemented.

42. A computer-readable storage medium, configured to store a computer program, wherein when the computer program is executed, the method according to any one of claims 18 to 34 is implemented.

43. A computer program product, comprising computer program instructions, wherein when the computer program instructions are executed, the method according to any one of claims 1 to 17 is implemented.

44. A computer program product, comprising computer program instructions, wherein when the computer program instructions are executed, the method according to any one of claims 18 to 34 is implemented.

45. A computer program, wherein when the computer program is executed, the method according to any one of claims 1 to 17 is implemented.

46. A computer program, wherein when the computer program is executed, the method according to any one of claims 18 to 34 is implemented.
